# EUROPEAN PATENT APPLICATION

(11) **EP 4 238 813 A1**
(43) Date of publication of application: **06.09.2023**
(21) Application number: 23159992.9
(22) Date of filing: 03.03.2023
(51) Int. Cl.: B60L 53/30, H02G 3/04, B60L 53/16, B60L 53/31

(54) **CHARGING BOX FOR ELECTRIC VEHICLE**

(30) Priority: 04.03.2022 NO 20220274
(71) Applicant: Q-Light AS, 4632 Kristiansand (NO)
(72) Inventor: Sjeggestad, Sven Olav, 4628 Kristiansand (NO); Repstad, Kristoffer, 4643 Søgne (NO); Nguyen, Tam Xuan, 4635 Kristiansand (NO)
(74) Representative: Bryn Aarflot AS

(57) **Abstract**

The present invention concerns an electric vehicle (EV) charger (1) comprising a back plate (13) and a front housing (8). The EV charger (1) further comprises a protection cap (5) arranged on a charging socket (4) of the EV charger (1), a multi-purpose button (2) arranged on the front housing (8) and a LED bar display (3) arranged on the front housing (8). The protection cap (5) is strained by a spring (11) and has at its end a semicircle-shaped lip (6). The semicircle-shaped lip (6) is configured to facilitate guiding a charging plug (12) of a charging cable (18) into the charging socket (4). The multi-purpose button (2) is configured to control, with the help of a user, different functionalities and/or feedbacks that are programmed in an action matrix. The button (2) is providing multi-actions based on at least one of: a number of pressures applied and/or duration of these pressures. The multi-actions are defined in the action matrix. The LED bar display (3) comprises at least one bar, wherein each bar is configured to indicate at least one of: percentage of desired future charging level, charging status of a car at the moment, charging delay and/or charging time. The EV charger (1) can further comprise a light source (7) arranged to illuminate an area where the EV charger (1) is physically located and to further illuminate a specific area where disconnecting and connecting of the charging plug (12) to the charging socket (4) takes place. The light source (7) can be sensor-controlled by at least one of: a motion sensor and/or a daylight sensor.

## Description

### TECHNICAL FIELD

The present invention relates to a charging box for an electric vehicle (EV).

### BACKGROUND OF THE INVENTION

Conventional charging boxes for electric vehicles (EV) can typically be divided in two categories; "smart" charging boxes operated by specially developed mobile application(s) and/or through a provider's cloud, and "basic" charging boxes operating as conventional electrical sockets with no control options for the charging process other than manually connecting/disconnecting the EV to the charging box.

Existing charging boxes represent a barrier for many consumers to easily apply a charging pattern where the EV is charged when electricity prices are low (typically during the night, when the unused grid capacity is high).
- "Smart" charging boxes offer unfavorable use of controlling the charging through a mobile application / app, in addition to the risk of the charging box becoming unusable due to bad service and/or connection between the charging unit / box and the provider's cloud.
- "Basic" charging boxes typically offer zero opportunity for the consumer to e.g. adjust when charging shall start.

Furthermore, current charging boxes for EVs are difficult to access or nonaccessible (at all) due to:
- challenging to navigate around and/or see the charger in the dark;
- typical two-hands handling of the charging plug which requires two available hands (meaning that shopping bags or small children must be put down);
- the charging plug is typically placed at the front of the charging box unit which can be challenging to reach for e.g. a wheelchair user.

### SUMMARY OF THE INVENTION

It is an object of the present invention to provide an EV charger that is easy to handle and where charging settings can be defined by the consumer without any need for cloud and/or app connection.

Another object of the invention is to provide an EV charger having one-hand handling of the charging plug and/or the EV charger itself in addition to having the charging socket / connector being located at the lower end of the charging box unit which potentially makes the plug more accessible to e.g. a wheelchair user.

Yet another object of the invention is to provide an EV charger having an automatic light which makes the charging box unit accessible in the dark.

Further object of the invention is to provide an EV charger that is robust, cheap and easy to buy, maintain and/or use compared to the known EV charging units.

According to a first aspect of the invention this is achieved with an electric vehicle (EV) charger comprising a back or mounting plate and a front housing. The EV charger further comprises:
a protection cap arranged on a charging socket thereof;
a multi-purpose button arranged on the front housing and configured to control, with the help of a user, different functionalities and/or feedbacks that are programmed in an action matrix; and
a LED bar display arranged on the front housing and comprising at least one bar, wherein each bar is configured to indicate at least one of: percentage of desired future charging level, charging status of a car at the moment, charging delay and/or charging time.

The multi-purpose button provides multi-actions based on at least one of: a number of pressures applied and/or duration of these pressures, wherein the multi-actions are defined in the action matrix. The multi-actions for all functionalities and/or feedbacks in the action matrix can be configured to be preprogrammed and/or updated if the intended usages change. The multi-purpose button can be a touch sensor, wherein the touch sensor can have tactile feedback.

The protection cap can be strained by a spring and has at its end a semicircle-shaped lip. The semicircle-shaped lip is configured to facilitate guiding a charging plug of a charging cable into the charging socket. The charging socket can be located at one lower end corner of the front housing and can be inclined outwards and downwards with about 45 degrees.

Each of said at least one bar can be illuminating in different colors, such as for example red, green, blue, yellow, pink and light blue.

The EV charger can further comprise a light source arranged to illuminate an area where the EV charger is physically located and to further illuminate a specific area where disconnecting and connecting of the charging plug to the charging socket takes place. The light source can be sensor-controlled by at least one of: a motion sensor and/or a daylight sensor. The light source can be a LED light source.

The EV charger can further comprise at least one of: a vocalization unit having at least one loudspeaker, a spirit level inbuilt on the back or mounting plate, and/or a clock.

The EV charger can further comprise a dipswitch configured to select a maximum current output between 6 A and 32 A.

The main features of the present invention are given in the independent claims. Additional features of this invention are given in the dependent claims.

### BRIEF DESCRIPTION OF THE DRAWINGS

These and other aspects of the invention are apparent from and will be further elucidated, by way of example(s), with reference to the drawings, wherein:
Fig. 1 shows a charging box unit for an electric vehicle according to the present invention.
Fig. 2 shows the EV charger according to the invention, wherein the one-hand handling of the charging plug is illustrated.
Fig. 3 shows the control button and LED bar display of the EV charger, where the user can control the charging process by deciding on different functionalities and/or feedbacks.
Fig. 4 shows different components within the EV charger.
Fig. 5 shows the back or mounting plate of the EV charger.

### DETAILED DESCRIPTION OF THE EMBODIMENTS

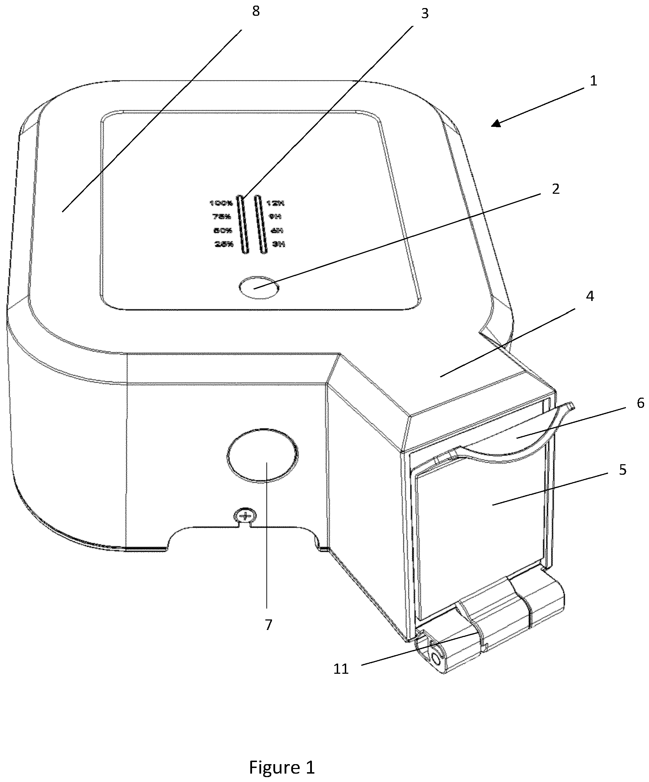

Fig. 1 shows a charging box unit 1 for an electric vehicle (also called: EV charger 1) with a button 2 (also called: manual control button 2 or control button 2) for programming and/or managing of the charging box 1. The EV charger 1 comprises a front housing 8. The button 2 can be located at the front housing 8 of the charging unit 1 and can allow a user to decide on different functionalities and/or feedbacks, such as, but not limited to, charging power, charging percentage, charging time or period, start time delay, receiving different direct feedbacks, etc.

The manual control button 2 can have a circular form, but other suitable forms can also be possible, such as, but not limited to, square, hexagonal, etc. The control button 2 can be placed centrally on a lower half or part of the front housing 8 of the EV charger 1. The control button 2 can be equipped with a sensitive surface where a touch from a finger of the user should be sufficient to prompt the desired action performed by the EV charger 1, meaning that the button 2 can be a touch sensor. The mechanism of the control button 2 can thus be based on capacitive technology which is a proven and well-functioning method for transmitting an analog signal to a digital signal with an intention of performing a specific action. The EV charger 1 is equipped with only one manual control button 2 as it can provide multi-actions based on at least one of: a number of pressures applied and/or duration of these pressures. Electronics 9, having a processor or CPU 10 and being arranged within the EV charger 1, can be supplied with a separate firmware, that has been specially developed, to receive and process the digital signals from the control button 2, which in turn activates a desired action according to an action matrix. The installed firmware can be preprogrammed and/or updated if the intended usages change. The control button 2 provides quick and efficient access to all settings and user applications that can be effectuated with the EV charger 1.

The control button 2 is located universally with the potential that it opens for use of both functionally healthy and disabled users. Furthermore, the control button 2 can be discreetly recessed in the front housing 8 of the EV charger 1 to ensure aesthetic expression that a designer would like to emphasize.

Based on a risk analysis, the choice has been made to use manual operation with direct transfer to the CPU 10 without going through any 3rd party solutions, such as mobile applications (APPs) and/or cloud solutions, as that could potentially introduce more sources of error from sender to receiver. Prioritization of high regularity and the importance of undisturbed signal transmission (signal quality) from sender to receiver has led to the selection of the single manual control button 2.

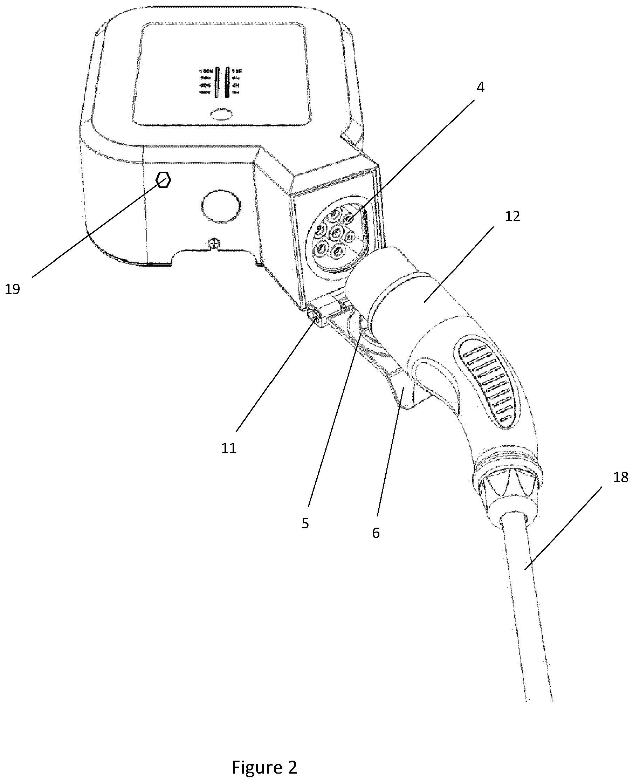

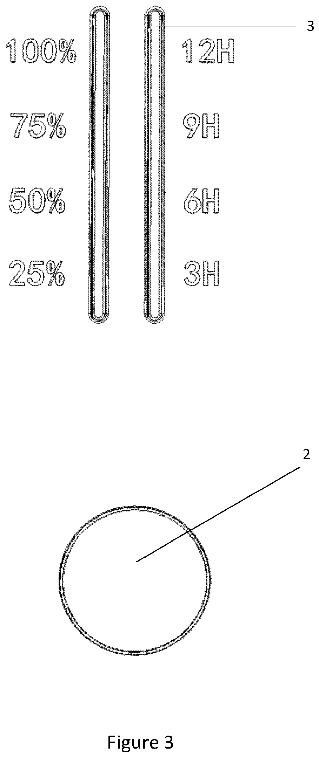

Severely visually impaired and the blind are in a first embodiment of the invention not expected to be in the customer target group of the EV charger 1. This is due to one of the actions performed on the control button 2 providing a direct feedback action in the form of colors changing on a LED bar display 3 (shown on fig. 1 and 3) arranged on the front housing 8 of the EV charger 1. As the touch sensor 2 has no tactile signals or vocalization unit this is likely to pose a major accessibility problem for the target group of the severely visually impaired and blind. However, in another embodiment the EV charger 1 can be supplied with a touch sensor 2 having tactile feedback and/or a suitable vocalization unit 16. The vocalization unit 16 can be arranged within the EV charger 1. The vocalization unit 16 can comprise at least one loudspeaker 17. Said at least one loudspeaker 17 can be provided with a suitable audio access 19 for the sound through the front housing 8 of the EV charger 1 (shown on fig. 2). In addition, the control button 2 can be made recessed or protuberant with respect to the front housing 8 of the EV charger 1 to ensure easy accessibility for the target group of the severely visually impaired and blind.

Fig. 2 shows the EV charger 1 according to the invention, wherein the one-hand handling of the charging plug 12 is illustrated. The one-hand handling of the charging plug 12 is explained below.

The location of a charging socket 4 is designed so that it can be operated with one hand. This, combined with the fact that the socket 4 is located on the bottom of the EV charger 1, potentially makes the product more wheelchair user friendly. The charging socket 4 has a sloping diagonal shape on the EV charger 1 to minimize the possibility of external damage, such as penetration of snow/water and/or direct sun exposure. Access to the charging socket 4 is universally designed for all customer groups as it can be operated with one hand. A protection cap 5 on the charging socket 4 is designed with a semicircle-shaped lip 6 at the end of the cap 5 which helps with guiding the plug 12 into the charging socket 4 in a safe and efficient manner. The semicircular shape of the lip 6 is also intended for an ergonomic functionality, where a thumb of the user's hand gets a good grip on the plug 12 to overcome the counterweight of the spring 11 that keeps the protection cap 5 always closed. The counterforce of the spring 11 can be calculated based on e.g. a normal type 2 plug both in terms of size and weight, so that the cap 5 will, with a simple movement with the plug 12, overcome the counterforce of the spring 11. Operational use of the one-handed operation of the protection cap 5 is intended to push down the protection cap 5 with the plug 12 and thereafter insert the plug 12 into the semicircle-shaped lip 6 which guides the plug 12 into a receiver (e.g. a type 2 receiver) of the charging socket 4. The charging socket 4 can be arranged on one vertical side wall of the front housing 8 and/or the charger 1 or at one lower side corner of the front housing 8 and/or the charger 1 and in such a manner that the vertical axis of the EV charger and the axis of symmetry of the charging socket 4 will have an angle between 10 and 80 degrees, and preferably around 45 degrees. One degree of invention in one-handed operation of the protection cap 5 lies in the design of the protection cap 5, which according to one embodiment can be constructed with a lip 6 of e.g. 3 cm length and e.g. 6,5 cm width, graded at an angle of about 45 degrees vertically. The form / shape of the semicircle-shaped or concave lip 6 is configured to follow and/or match the corresponding convex form / shape of the plug 12. The lip 6 is arranged at the front of the protection cap 5, thereby always available for its intended function which is to meet and catch the charging plug 12 and guide it into the charging socket 4 with the one-handed operation. The one-handed operation function allows for the other arm to be free, and the user can operate the EV charger 1 while at the same time holding a child, grocery bag(s), etc.

At the end of the charging process, the EV charger 1 is designed for one-hand handling of pulling out the plug 12, by pulling the plug 12 diagonally downwards. When the plug 12 is disconnected from the charging socket 4, the protection cap 5 will automatically close due to the built-in spring 11. Thus, the socket 4 of the EV charger will always be securely closed when it is not connected to the plug 12. The protection cap 5 is made of the same manufacturing quality as the rest of the EV charger 1 (e.g. front housing 8, etc.). In the event of a malfunction, it is possible to replace the spring 11 or even the entire protection cap 5 in order to maintain the function of the protection cap 5.

The EV charger 1 is further equipped with a light or lighting source 7, which can be, but is not limited to, a LED lighting source. The lighting source 7 can be sensor-controlled, e.g. by a motion sensor detecting any movement of the user and/or a daylight sensor turning on the lighting source 7 when the surrounding light gets under a predetermined desired level of lux or lumens, such as, but not limited to, e.g. about 5 Lux, and turning off the lighting source 7 when the surrounding light gets over another predetermined desired level of lux or lumens, such as, but not limited to, e.g. about 300 Lux. The lighting source 7 can be recessed in the frame / front housing 8 at the bottom of the EV charger 1. This choice is in anticipation of a possible future restriction on the use of lighting in a vertical arc upwards in urban environments. To help limit light pollution, the lighting source 7 on the EV charger 1 can be placed on the bottom of the charger 1 which is environmentally friendly as the lighting source 7 faces vertically downwards. The lighting source 7 has the function of illuminating the area where the EV charger 1 is physically located. Furthermore, the lighting source 7 can have the function of illuminating the area where the disconnecting and connecting of the charging plug 12 to the charging socket 4 takes place. The lighting source 7 can be triggered in various ways either as a manual action or automatic on/off switching via light sensing and/or motion sensing signals. The motion and/or light sensors of the lighting source 7 can if desired be overridden or overruled by the control button 2 or alternatively by the car app (if this is possible). The lighting source 7 can have different suitable shapes, wherein it can for example be either a single point light or a light strip, but it is not limited to only these shapes. The lighting source 7 can be located at the bottom of the EV charger 1 also with the intention of being protected from external influences, such as snow, rain, sea spray, etc. The lighting source 7 can also be positioned at the bottom of the EV charger 1 so that it does not cause flash blindness or appear bothersome in daily use. The lighting source 7 can also function as area lighting in a dark garage or on a house wall.

Fig. 3 shows the control button 2 and the LED bar display 3 of the EV charger 1, where the user can control the charging process by deciding on different functionalities and/or feedbacks. The LED bar display 3 can have one or more bars. In the present embodiments the LED bar display 3 comprises two bars, one bar showing the percentage of desired future charging level and/or charging status of the EV at the moment (e.g. 25%, 50%, 75%, 100% effect), and the other bar showing charging delay (in hours) - e.g. 3, 6, 9, 12 h. Additionally and/or alternatively, the charging box 1 can be programmed, by means of the control button 2 and with the help of an integrated timer and/or clock 20, to charge the EV for a certain period of time, such as e.g. 3, 6, 9, 12 h. Thus, it could for example be possible to combine a charging delay of e.g. 3 hours with a desired charging time period of e.g. 6 hours. Of course, for the respective bar, other percentage rates can also be possible, such as for example, but not limited to, 30%, 60%, 90%, 100%. And of course, for the respective bar, other hour rates can be possible, such as for example, but not limited to, 3, 8, 12, 16 h.

In addition, each bar can illuminate in different colors, such as e.g. red, green, blue, yellow, pink, etc. in order to show different action(s) and/or feedback(s). For example, the percentage bar can show, e.g. in green, a feedback regarding the effect the EV charger 1 is set to provide to the vehicle, e.g. about 25%, while the percentage bar can in addition show, e.g. in blue, a feedback if the EV charger is set at e.g. 75% effect. Alternatively, in another embodiment of the charger 1, the percentage bar can for example show, e.g. in green, a feedback regarding the percentage of present charged level of the vehicle at the moment, e.g. about 25%, while the percentage bar can in addition show, e.g. in blue, a desired charging level that is to be reached, e.g. 75%. And the hour bar can show, e.g. in yellow, a desired delay time, such as e.g. 3 hours. Additionally and/or alternatively, in another embodiment of the charger 1, the hour bar can show, e.g. in red, a desired total charging time period for the vehicle, such as e.g. 6 or 9 hours. Other different combinations should also be possible.

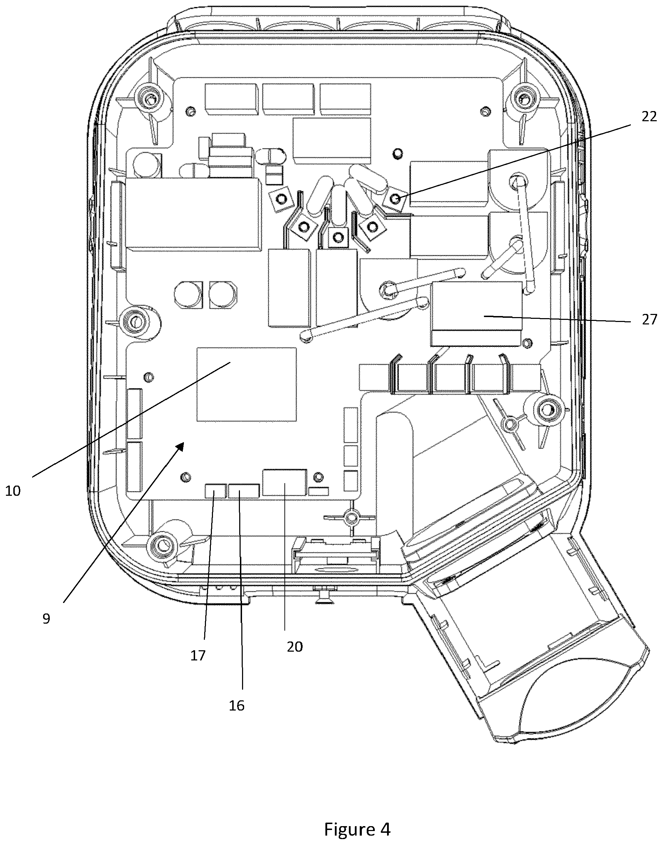

Fig. 4 shows different components within the EV charger 1, such as the electronics 9 with the processor / CPU 10, a residual-current device (RCD) or a residual-current circuit breaker (RCCB) or a ground fault circuit interrupter (GFCI) generally indicated by a reference numeral 27 and other elements in a potential other embodiment of the EV charger 1 including a vocalization unit 16, a loudspeaker 17 and/or a clock 20.

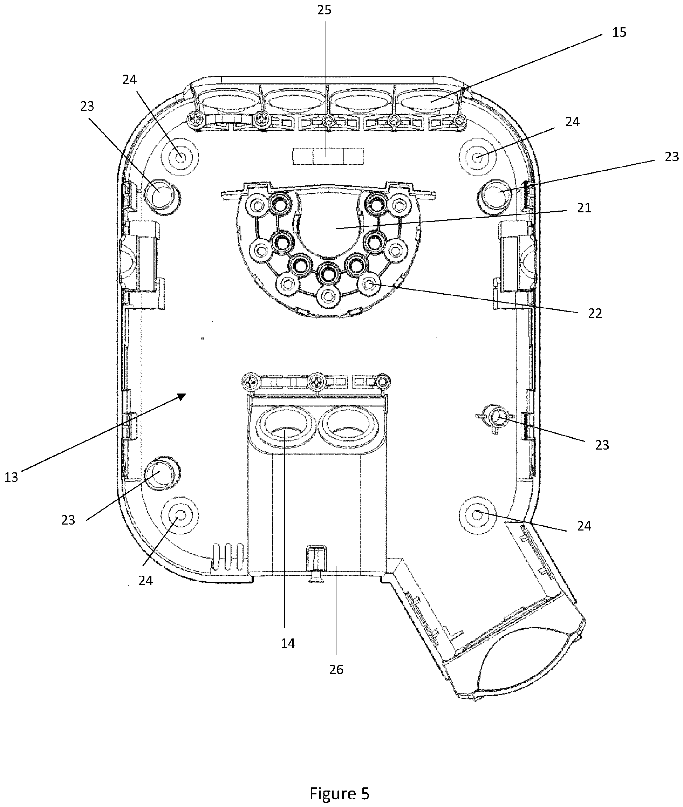

Fig. 5 shows the back or mounting plate 13 of the EV charger 1 that can be fixed to a wall or structure with sufficient load-bearing capacity, either outdoors or indoors. The back mounting plate 13 can be fixed to a wall or a structure and connected with a cable inserted through one of e.g. two cable inserts 14 underneath/behind the mounting plate 13 or through one of e.g. four cable inserts 15 on top of the mounting plate 13. For outdoor use of the EV charger 1 it is recommended to use one of the two cable entries 14 underneath/behind the mounting plate 13 when fixing the mounting plate 13 to a wall or structure as this further ensures that water cannot enter the EV charger box unit 1. For indoor use of the EV charger 1 one of the four cable entries 15 from the top of the mounting plate 13 can be used as it will be easier to insert a cable therefrom. If, when using one of the four cable entries 15 from the top of the mounting plate 13 to insert the cable, water was to enter the EV charger 1, the water or water drops would, due to gravity, be led down to a safe zone 26 away from electrical conductors and a connection terminal 21 being located at a higher point on the mounting plate 13 than the highest possible point for drop collection.

The mounting plate 13 functions as a receiver for the EV charger 1. The mounting plate can have for example five wire connectors 22 that can each be connected to a wire of e.g. maximum 10 mm² Cu. The five wire connectors 22 allow for the installer to connect the EV charger 1 to different electric networks, e.g. to either of the three electric networks in Norway (TN, TT, IT), and thus the EV charger 1 (called QUDO^{®}) can operate on both three-phase power supply and single-phase power supply depending on: how the wires are connected to the five wire connectors 22 by the installer, the level of the power supply at the location the EV charger 1 is installed, and what wiring the electric vehicle can receive.

The installer can also choose the charging current with the help of a charging current dipswitch, e.g. 0A, 6A, 10A, 13A, 16A, 20A, 25A and 32A. This allows for further flexibility for the user depending on the power supply at the location where the EV charger 1 is installed.

The mounting plate 13 also functions as an attachment point for the EV charger 1. The mounting plate 13 can have for example four guiding tracks 23 that makes the attachment of the EV charger 1 to the mounting plate 13 easier and safer as the mounting plate 13 is electrically charged when connected to power. The mounting plate 13 can also have for example from two to four quick-locking mechanisms 24 that allow the user to lock or unlock and disconnect the EV charger 1 from the mounting plate 13. The disconnecting of the EV charger 1 from the mounting plate 13 must be performed by authorized electricians. To ensure easier and more practical fixing of the mounting plate 13 to a wall or structure the mounting plate 13 can be equipped with an inbuilt spirit level 25.

Several different possible action matrixes will be described below. Other different alternatives, not mentioned below, should also be possible.

Alternative 1: If the user wants to use the setting(s) applied last time the car / vehicle (EV or hybrid) was charged, the user simply connects the charging cable 18 to the vehicle and the EV charger 1 (QUDO^{®}). This implies that if e.g. 6 hours delay and e.g. 50% effect was applied last time (out of the maximum effect of e.g. 16 A or 32 A), the same settings will automatically be applied again. This is a practical solution if the EV is parked in the garage at e.g. around 17:00/5 PM every workday, so that charging with e.g. 6 hours delay starts around 23:00 / 11 PM (since electricity prices are typically lower during the night) and with an effect (e.g. 50%) which gets the EV charged to a desired level (e.g. 75% or 100%) at e.g. around 06:00 / 6 AM in the morning.

Alternative 2: If the user wants to use different setting(s) from the setting(s) applied last time the vehicle / car (EV or hybrid) was charged, new setting(s) can easily be redefined.
- Step 1 - defining the charging power: Press the button 2 one time and the "power" light bar will turn to e.g. pink; press the button 2 (one or more times) until you get to a desired effect level (by e.g. a 25% interval). Wait e.g. 1,5 seconds to confirm the desired choice.
- Step 2 - defer the charging of the vehicle / car: Press the button 2 for 1,5 seconds, the "power" light bar will turn to e.g. pink; press the button 2 until you get to the desired time delay (by e.g. a 3-hour interval). Wait e.g. 1,5 seconds to confirm the desired choice.

In both Alternative 1 and Alternative 2, the lighting source 7 can be turned manually on/off by holding the button 2 for e.g. 4 seconds.

With the EV charger 1 according to the invention the user can by just applying the button 2 (or without any actions as described in alternative 1 above) get significant electricity savings without any need for use of an additional app - which is a barrier for a large number of EV or hybrid car owners. Furthermore, the invention can be used in combination with the (mobile) app provided by the producer of the EV (where the user e.g. can define that charging should always stop when the battery is 80% charged).

The described functionality of the EV charger 1 applies to basic chargers without any "smart functionality software" that communicates with the car and the car's mobile application. However, the EV charger 1 can with certain minor adjustments also include a suitable "smart functionality software".

The present EV charger 1 makes electricity optimization accessible for all EV charger owners. Currently, only a minority of electric vehicle (EV) or hybrid car owners use the app of the EV charger to control the charging process, and the apps of the car producers are more often used than the apps of the EV charger providers. Furthermore, surveys show that around 40% of the respondents do not use any charge optimization at all, although this in most instances results in the car charging when electricity prices and pressure on the power grids are highest (e.g. 4 - 7 PM / 16:00 - 19:00). This clearly demonstrates that optimizing the car charging based on a separate app is a barrier for many electric or hybrid vehicle owners. With electric vehicles overtaking the sale of fossil fuel vehicles in Norway, there will be even more EV owners that will benefit from a practical and userfriendly way to capture the majority of energy optimization potential in the period to come.

Furthermore, the present EV charger 1 gets all charging related activities completed in one sequence of movement. The overall principle of the EV charger 1 (QUDO^{®}) is that in a logical sequence of actions, you can activate and define the charger 1 parameters within a few seconds. If you should want to continue using the same instructions as last time (e.g. to start charging in 6 hours with 75% effect), you would only need to plug in the charging cable 18. If you should want to change the settings, you can simply use the control button 2 to define when charging should start (by e.g. 3 hours sequences) and how much electric power/effect you want the charger 1 to extract from your fuse box (by e.g. 25% intervals). As such, the barriers to always have control on the charging status and always charge the EV or hybrid car at a logical time during the day/night is significantly reduced vs. being required to use your mobile phone app.

In addition, the present EV charger 1 provides for only using one hand. The control button 2, the protection cap 5 with the semicircle-shaped lip 6 connecting the charging plug 12 to the socket 4, and the lighting solution 7 can all be handled / performed using only one hand, further reducing the barriers to perform the required steps to improved charging (e.g. when having a bag, a child, etc. in one hand after work).

In addition, the present EV charger 1 with its lighting setup maximizes userfriendliness and with the help of the motion and/or daylight sensors it can further contribute to some energy optimization.

The simplicity of the present EV charger 1 does not go at expense of the opportunity to further tailor the individual customer's charging optimization. Most electric vehicles have a separate app, where you can define the charging parameters manually.

In sum, the present invention makes EV charging more accessible for a large number of users, and in particular those who:
- often need an extra hand (carry a baby/bag, use a crutch etc.);
- find it a barrier to install - and continuously use - an additional mobile app;
- has a driving pattern where standard setting(s) charge the car / vehicle optimally;
- need extra lighting 7 to see the charger 1 and the area around.

Additional modifications, alterations and adaptations of the present invention will suggest themselves to those skilled in the art without departing from the scope of the invention as defined in the following patent claims.

## Claims

1. An electric vehicle (EV) charger (1) comprising a back plate (13) and a front housing (8), the EV charger (1) further comprising:
a charging socket (4);
a protection cap (5) arranged on the charging socket (4), the protection cap (5) being strained by a spring (11) and having at its end a semicircle-shaped lip (6), the semicircle-shaped lip (6) configured to facilitate guiding a charging plug (12) of a charging cable (18) into the charging socket (4); and
a multi-purpose button (2) arranged on the front housing (8) and configured to control, with the help of a user, different functionalities and/or feedbacks that are programmed in an action matrix, the button (2) providing multi-actions based on at least one of: a number of pressures applied and/or duration of these pressures, the multi-actions being defined in the action matrix;
wherein the charging socket (4) is located at one lower end corner of the front housing (8) and is inclined outwards and downwards with about 45 degrees.

2. The EV charger (1) according to claim 1, further comprising:
a LED bar display (3) arranged on the front housing (8) and comprising at least one bar, wherein each bar is configured to indicate at least one of: percentage of desired future charging level, charging status of a vehicle at the moment, charging delay and/or charging time.

3. The EV charger (1) according to claim 1 or 2, further comprising:
a light source (7) arranged to illuminate an area where the EV charger (1) is physically located and to further illuminate a specific area where disconnecting and connecting of the charging plug (12) to the charging socket (4) takes place, the light source (7) being sensor-controlled by at least one of: a motion sensor and/or a daylight sensor.

4. The EV charger (1) according to claim 3, wherein the light source (7) is a LED light source.

5. The EV charger (1) according to claim 2, wherein each of said at least one bar is illuminating in different colors, such as for example red, green, blue, yellow, pink and light blue.

6. The EV charger (1) according to any one of claims 1-5, wherein the multi-purpose button (2) is a touch sensor.

7. The EV charger (1) according to claim 6, wherein the touch sensor (2) has tactile feedback.

8. The EV charger (1) according to any one of claims 1-7, further comprising at least one of: a vocalization unit (16) having at least one loudspeaker (17), a spirit level (25) inbuilt on the back plate (13), and/or a clock (20).

9. The EV charger (1) according to any one of claims 1-8, wherein the multi-actions for all functionalities and/or feedbacks in the action matrix are configured to be preprogrammed and/or updated if the intended usages change.

10. The EV charger (1) according to any one of claims 1-9, wherein the EV charger (1) further comprises a dipswitch configured to select a maximum current output between 6 A and 32 A.
